# EUROPEAN PATENT SPECIFICATION

(11) **EP 2 977 099 B1**
(45) Date of publication and mention of the grant of the patent: **03.06.2020**
(21) Application number: 15173691.5
(22) Date of filing: 24.06.2015
(51) Int. Cl.: B01D 67/00, B01D 69/12, B01D 69/10, B01D 53/22

(54) **METHOD FOR FORMING A MEMBRANE FILTER MADE OF PHOTOSENSITIVE MATERIAL**
HERSTELLUNGSMETHODE FÜR EINEN MEMBRANFILTER AUS PHOTOSENSITIVEM MATERIAL
PROCEDE DE FABRICATION D'UN FILTRE À MEMBRANE DE MATERIAU PHOTOSENSIBLE

(30) Priority: 27.06.2014 JP 2014133371
(43) Date of publication of application: 27.01.2016
(73) Proprietor: TOKYO OHKA KOGYO CO., LTD., Kawasaki-shi, Kanagawa 211 0012 (JP)
(72) Inventor: NOGUCHI, Takuya, KANAGAWA, 211-0012 (JP); OGATA, Toshiyuki, KANAGAWA, 211-0012 (JP); KUNITAKE, Toyoki, Fukuoka, 813-0017 (JP); FUJIKAWA, Shigenori, Fukuoka, 813-0017 (JP)
(74) Representative: Plasseraud IP

(56) References cited:
- WO-A1-01/41905
- WO-A1-2013/043124
- WO-A1-2013/049936
- JP-A- 2004 057 993
- JP-A- 2011 101 837
- US-A1- 2002 162 791
- US-A1- 2006 263 548

## Description

### BACKGROUND OF THE INVENTION

### Field of the Invention

The present invention relates to a method for producing a membrane filter in which a thin film having a nanometer order thickness and a support film which is a porous film having a micrometer order thickness are laminated with each other.

### Related Art

In recent years, a self-supporting thin film having a large surface area and a nanometer order thickness attracts attention as a film which can be used as a selective permeable film, a film for microsensor and drug delivery, and the like. Therefore, various methods for producing a self-supporting thin film has been studied, and there have been known a water surface casting method, an interfacial reaction method using a silane coupling agent, and the like. However, thin films obtained by these methods usually have such problems that the thin films have insufficient mechanical strength and are not easy to achieve the enlargement of the area, and also there is limitation on accuracy of the obtained thin film.

Patent Document 1 discloses, an a specific example of a method for producing a self-supporting thin film, a polymer thin film having self-supportability even if the thickness is set at 100 nm or less, and a method for producing the polymer thin film. More specifically, the polymer thin film is produced by providing a sacrificial layer on a surface of a support, allowing a polymerizable compound in the composition to undergo chain polymerization on a surface of the sacrificial layer, and removing the sacrificial layer to thereby detach the support from the polymerized composition.

Patent Document 2 discloses a multilayer filter.

Patent Document 3 discloses a method of fabrication of free standing membranes with open pore structures and synthesis of nanoparticle patterns using these membranes.

Patent Document 4 discloses microporous filter membrane, method of making microporous filter membrane and separator employing microporous filter membranes.

Patent Document 5 discloses a method of manufacturing hydrogen producing filter.

Patent Document 6 discloses a separation membrane, and method of producing the same.
Patent Document 1: Japanese Unexamined Patent Application, Publication No. 2008-285617
Patent Document 2: PCT Patent Application, Publication No. WO 2013/043124 A1.
Patent Document 3: PCT Patent Application, Publication No. WO 2013/049936 A1.
Patent Document 4: PCT Patent Application, Publication No. WO 01/41905 A1.
Patent Document 5: Japanese Patent Application, Publication No. 2004-057993.
Patent Document 6: Japanese Patent Application, Publication No. 2011-101837.

### SUMMARY OF THE INVENTION

The scope of the invention is defined by the claims. Any subject-matter falling outside the scope of the claims is provided for information purposes only.
Certainly, the thin film produced by the method mentioned in Patent Document 1 is an extremely thin film having a thickness of 100 nm or less, and has self-supportability. However, regardless of having self-supportability, such thin film is an ultrathin film having nanometer order thickness and is therefore fragile in view of strength, thus making it difficult for the thin film to use various applications.

Therefore, when the thin film produced in the method mentioned in Patent Document 1 is applied to various applications, there is a need to compensate insufficient strength of the thin film by integrating some support film with the thin film. There is a need for such support film to support the thin film without a defect and also not to impair a functions such as selective permeability of the thin film. However, a sufficient study is not made on what kind of a support film can satisfactorily reinforce the thin film without impairing performances of the thin film, and also can easily form a laminate of a large area thin film with a support film.

The present invention has been made in light of the above problems, and an object thereof is to provide a membrane filter including a thin film having a nanometer order thickness as a base, which is easy to increase the size and also has enough strength for use as a filter.

The present inventors have found that the above object can be achieved by laminating a thin film without holes penetrating in thickness direction with a method according to claim 1.

According to the present disclosure, it is possible to provide a membrane filter including a thin film having a nanometer order thickness as a base, which is easy to increase the size and also has enough strength for use as a filter.

### BRIEF DESCRIPTION OF THE DRAWINGS

FIGs. 1A to 1H are view schematically showing a first method of a method for producing a membrane filter.
FIG. 1A is a view showing a substrate 10 including a sacrificial film 11.
FIG. 1B is a view showing a substrate 10 including a sacrificial film 11 and a photosensitive composition thin film 12.
FIG. 1C is a view showing the formation of a thin film 14 by irradiation of exposure light 13 to a photosensitive composition thin film 12 included in the substrate 10 with.
FIG. 1D is a view showing a substrate 10 including a sacrificial film 11, a thin film 14, and a photosensitive composition thick film 15.
FIG. 1E is a view showing the formation of the exposed area 16 and the unexposed area 17 in a photosensitive composition thick film 15 by regioselective irradiation of exposure light 13 to the photosensitive composition thick film 15 included in a substrate 10.
FIG. 1F is a view showing the development of a photosensitive composition thick film 15 including the exposed area 16 and the unexposed area 17 with a developing solution 18.
FIG. 1G is a view showing a substrate 10 including a sacrificial film 11, a thin film 14, and a support film 19.
FIG. 1H is a view showing detaching of a membrane filter 21 from a substrate 10 by immersion of a membrane filter 21 including a thin film 14 formed on the substrate 10 via a sacrificial film 11, and a support film 19 in a dissolving solution 20.
FIGs. 2A to 2C are view schematically showing a second method of a method for producing a membrane filter.

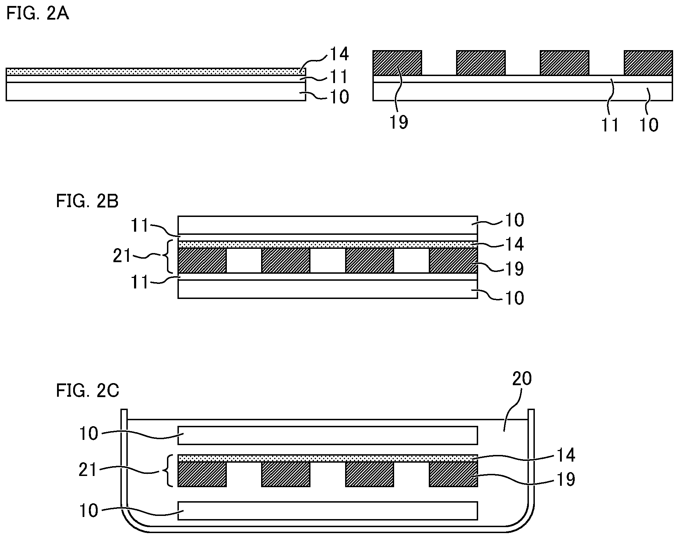

FIG. 2A is a view showing a substrate 10 including a sacrificial film 11 and a thin film 14, and a substrate including a sacrificial film 11 and a support film 19.
FIG. 2B is a view showing bonding of a thin film 14 formed on each different substrate 10, with a support film 19.
FIG. 2C is a view showing detaching of a membrane filter 21 from a substrate 10 by immersion of a membrane filter 21 composed of a thin film 14 formed between two substrates 10 via a sacrificial film 11, and a support film 19 in a dissolving solution 20.

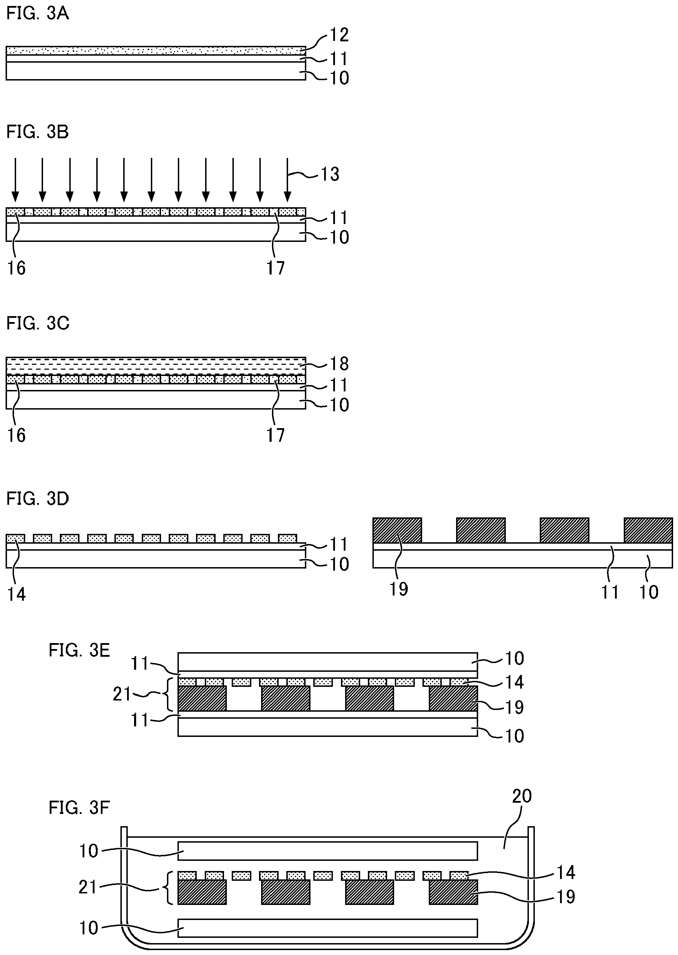

FIGs. 3A to 3F are view schematically showing a third method of a method for producing a membrane filter not in accordance with the invention.
FIG. 3A is a view showing a substrate 10 including a sacrificial film 11 and a photosensitive composition thin film 12.
FIG. 3B is a view showing the formation of the exposed area 16 and the unexposed area 17 in a photosensitive composition thin film 12 by regioselective irradiation of exposure light 13 to the photosensitive composition thin film 12 included in a substrate 10.
FIG. 3C is a view showing the development of a photosensitive composition thin film 12 including the exposed area 16 and the unexposed area 17 with a developing solution 18.
FIG. 3D is a view showing a substrate 10 including a sacrificial film 11 and a thin film 14 having through holes, and a substrate 10 including a sacrificial film 11 and a support film 19.
FIG. 3E is a view showing bonding of a thin film having through holes 14 formed on each different substrate 10, with a support film 19.
FIG. 3F is a view showing detaching of a membrane filter 21 from a substrate 10 by immersion of a membrane filter 21 composed of a thin film 14 having through holes formed between two substrates 10 via a sacrificial film 11, and a support film 19 in a dissolving solution 20.

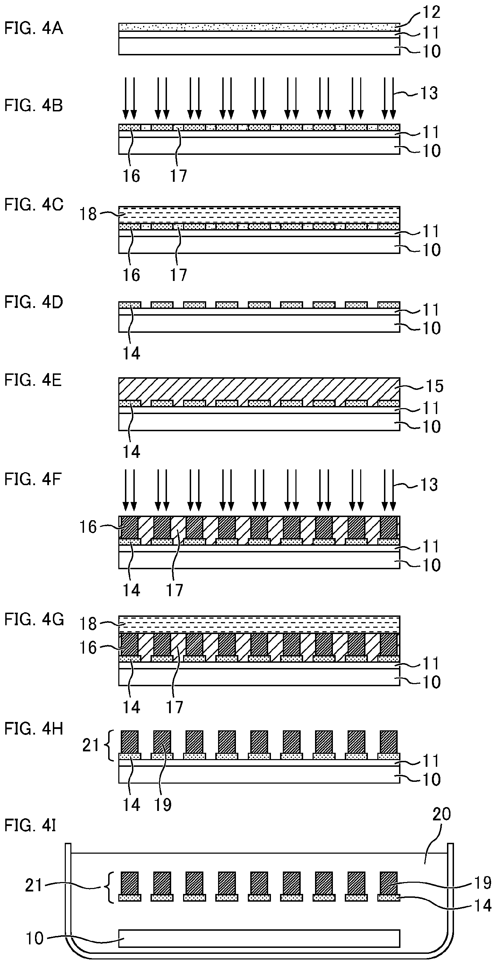

FIGs. 4A to 4I are view schematically showing modification of a first method of a method for producing a membrane filter not in accordance with the invention.
FIG. 4A is a view showing a substrate 10 including a sacrificial film 11 and a photosensitive composition thin film 12.
FIG. 4B is a view schematically showing the formation of the exposed area 16 and the unexposed area 17 in a photosensitive composition thin film 12 by regioselective irradiation of exposure light 13 to the photosensitive composition thin film 12 included in a substrate 10.
FIG. 4C is a view schematically showing the development of a photosensitive composition thin film 12 containing the exposed area 16 and the unexposed area 17 with a developing solution 18.
FIG. 4D is a view schematically showing a substrate 10 including a sacrificial film 11, and a thin film 14 having through holes.
FIG. 4E is a view schematically showing a substrate 10 including a sacrificial film 11, a thin film 14 having through holes, and a photosensitive composition thick film 15 formed on thin film 14.
FIG. 4F is a view showing the formation of the exposed area 16 and the unexposed area 17 in a photosensitive composition thick film 15 by regioselective irradiation of exposure light 13 to the photosensitive composition thick film 15 included in a substrate 10 with.
FIG. 4G is a view schematically showing the development of a photosensitive composition thick film 15 containing the exposed area 16 and the unexposed area 17 with a developing solution 18.
FIG. 4H is a view schematically showing a membrane filter 21 composed of a thin film 14 having through holes formed on a substrate 10 via a sacrificial film 11, an a support film 19.
FIG. 4I is a view schematically showing detaching of a membrane filter 21 from a substrate 10 by immersion of a membrane filter 21 including a thin film 14 having through holes formed on a substrate 10 via a sacrificial film 11, and a support film 19 in a dissolving solution 20.

### DETAILED DESCRIPTION

### Membrane Filter

The membrane filter according to the present disclosure is a membrane filter in which a thin film and a support film supporting the thin film are laminated with each other. The thin film has a thickness of 1 to 1,000 nm. The support film is made of a photosensitive composition or a cured product of the photosensitive composition. Therefore, the support film is typically a porous film having a thickness of 1 to 1,000 nm, which has a plurality of hole portions penetrating in the thickness direction, formed by exposure and development of a photosensitive composition film made of a photosensitive composition. Hereinafter, with respect to the thin film and the support film, hole portions penetrating in the thickness direction are also referred to as through holes.

Since the thin film and the support film can be easily formed by applying a resin solution or a liquid photosensitive composition, it is easy for the membrane filter according to the present disclosure to achieve the enlargement of the area. The thin film and the support film will be described in due order below.

### Thin Film

The thin film has a thickness of 1 to 1,000 nm. It is easy to reconcile the strength of the thin film and satisfactory permeability of the membrane filter, so that the thin film preferably has a thickness of 5 to 1,000 nm. Since thin film is extremely thin, even when through holes and vacancies are not present, the thin film enables permeation of various molecules composing a gas and a liquid according to the size of the gap formed between molecules of the material composing the thin film.

The thin film is preferably made of a photosensitive composition or a cured product of the photosensitive composition. In this case, the photosensitive composition film made of the photosensitive composition is preferably exposed and developed to form a thin film having the above-mentioned hole portions. Formation of plural through holes in the thin film enables permeation of a membrane filter for substances of relatively large size which cannot permeate a thin film having through hole. When thin film has through holes, it is possible to defiantly separate a liquid containing particles having the size larger than that of through holes into particles and a liquid using a membrane filter.

When the photosensitive composition film is exposed and developed to form a thin film having hole portions, a thin film having hole portions with precisely controlled opening diameter can be formed, thus enabling microfiltration using a membrane filter.

The material for formation of a thin film is an organic material. Because of its excellent processability and flexibility, typically, the material is preferably a polymer material. Examples thereof include solutions of various resins, a thermosetting composition, a photosensitive composition, and the like. The photosensitive composition includes a positive photosensitive composition in which the exposed area is solubilized in a developing solution, and negative photosensitive composition in which the exposed area is insolubilized in a developing solution. Both photosensitive compositions can be used to form a thin film.

The material for formation of a thin film is preferably a thermosetting composition capable of curing under heating, or a negative photosensitive composition capable of curing under exposure from the viewpoint being capable of forming a thin film having excellent strength. Of these curable compositions, a negative photosensitive composition capable of curing under exposure is preferable since a thin film can be formed within a short time.

There is no particular limitation on the composition of the thermosetting composition, as long as a thin film having a desired thickness can be formed. Examples of preferred thermosetting composition include a liquid composition containing an epoxy compound, and a curing agent for thermally curing the epoxy compound, and the like. Preferred examples of the negative photosensitive composition capable of curing under exposure include a composition containing an epoxy compound and a photosensitive curing agent, a composition containing an alkali-soluble resin, a photopolymerizable compound having an unsaturated double bond, and a photopolymerization initiator, and the like.

### Support Film

The support film is formed by exposure and development of a photosensitive composition film made of a photosensitive composition. The support film porous film having a thickness of 1 to 1,000 µm, which has a plurality of hole portions penetrating in the thickness direction. It is easy to reconcile the strength of the support film and satisfactory permeability of the membrane filter, so that the support film preferably has a thickness of 5 to 1,000 nm.

The support film is thicker than the thin film, and also has numerous through holes. Therefore, the membrane filter produced by laminating the thin film with the support film is less likely to be broken by a force applied at the time of handling of the membrane filter, or a pressure applied to the membrane filter in the case of permeation of a gas or liquid, while satisfactorily enabling permeation of a gas or liquid fed to the membrane filter.

It is possible to use, as the photosensitive composition for formation of the support film, both a positive photosensitive composition in which the exposed area is solubilized in the developing solution, and a negative photosensitive composition in which the exposed area is insolubilized in the developing solution. The material for formation of the support film is preferably a negative photosensitive composition which is cured under exposure from the viewpoint being capable of forming a thin film having excellent strength. Suitable examples of the negative photosensitive composition include the same materials as those for formation of the thin film.

The support film has plural through holes. There is no particular limitation on the shape of the opening on a surface of the support film corresponding to both ends of through holes. Examples of the shape of the opening are the same as those of the shape of the opening of through holes which may be possessed by the thin film.

There is no particular limitation on the average diameter of the opening of through holes, and the average diameter can be appropriately decided according to the size of a separation target, the strength of the thin film, and the area to be used of the entire filter.

The support film may be formed with either through holes having two or more openings each having a different shape, or through holes having two or more openings each having a different size.

### Method for Producing Membrane Filter

There is no particular limitation on the method for producing a membrane filter, as long as it is a method capable of laminating a thin film with a support film, each having a predetermined configuration. Preferred method for producing a membrane filter will be described below by way of a first method, a second method, and a third method.

### First Method

Of the method for producing a membrane filter according to the present disclosure, a preferred method when a thin film 14 has not through holes includes a method in which a thin film 14 is formed on a substrate 10 and a thick film of a photosensitive composition (hereinafter also referred to as the photosensitive composition thick film 15) is formed on the thin film 14, and then the thus formed photosensitive composition thick film 15 is exposed and developed to form a support film 19. This method is referred to as the first method of the preferred method for producing a membrane filter 21.

The material for formation of a thin film 14 is preferably a thermosetting composition capable of curing under heating, or a negative photosensitive composition capable of curing under exposure from the viewpoint being capable of forming a thin film 14 having excellent strength. Of these curable compositions, a negative photosensitive composition capable of curing under exposure is preferable since a thin film 14 can be formed within a short time.

Because of easy detaching of the membrane filter formed by laminating a support film 19 on the thin film 14 from the substrate 10, the thin film 14 is preferably formed on the substrate 10 via a sacrificial film 11 made of a material which dissolves in a liquid.

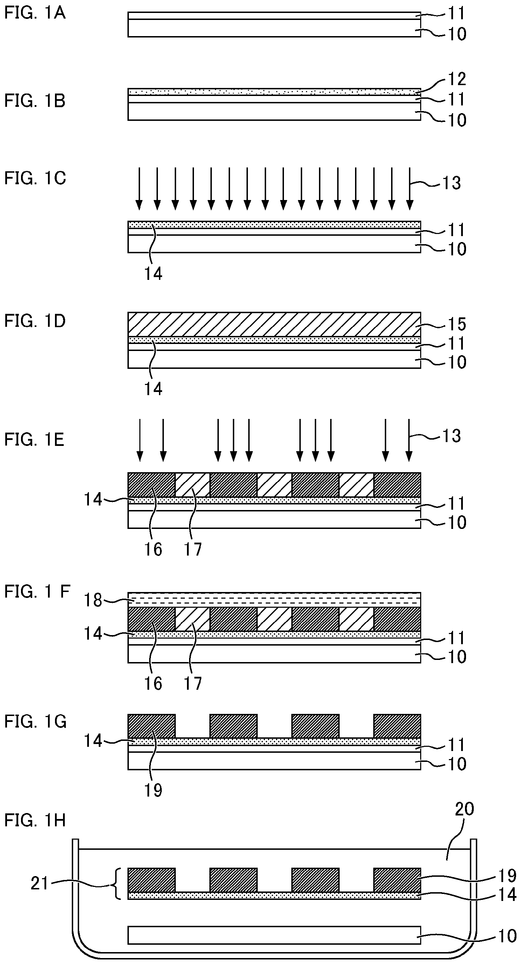

Using a negative photosensitive composition capable of curing under exposure, which is preferable in the first method, a method including a step of forming a thin film 14 on a substrate 10 via a sacrificial film 11 will be described with reference to FIGs. 1A to 1H.

First, as shown in FIG. 1A, a sacrificial film 11 is formed on a substrate 10. There is no particular limitation on the material of the substrate 10 as long as it is not a material which is attacked with or dissolved in an organic solvent contained in the photosensitive composition or a liquid for dissolving a sacrificial film 11. Examples of the material of the substrate 10 include silicone, glass, PET film, and the like.

There is no particular limitation on the method for forming a sacrificial film 11, and the method is preferably a method in which a coating solution for formation of a sacrificial film is applied on the substrate 10. Examples of the method for applying a material for formation of liquid sacrificial film on a substrate 10 include a method using a contact transfer type coating device such as a roll coater, a reverse coater, or a bar coater, or a non-contact type coating device such as a spinner (rotary coating device) or a curtain flow coater. A sacrificial film 11 is formed by drying a coating film formed after application using a method such as heating. There is no particular limitation on the thickness of the sacrificial film 11, and the thickness is preferably 0.1 to 100 µm, and more preferably 0.5 to 50 µm, from the viewpoint of quickly dissolving the sacrificial film 11.

Examples of the material of the sacrificial film 11 include polyvinyl alcohol resin, dextrin, gelatin, glue, casein, serac, gum arabic, starch, protein, polyacrylic acid amide, sodium polyacylate, polyvinyl methyl ether, copolymer of methyl vinyl ether with maleic anhydride, copolymer of vinyl acetate with itaconic acid, polyvinylpyrrolidone, acetyl cellulose, hydroxyethyl cellulose, sodium alginate, and the like. Of these materials, a plurality of materials capable of being soluble in the same kind of a liquid may be used in combination. From the viewpoint of the strength and flexibility of the sacrificial film 11, the material of the sacrificial film 11 may contain rubber components such as mannan, xanthan gum, and guar gum.

The coating solution for formation of a sacrificial film is prepared by dissolving the above-described material of the sacrificial film 11 in a liquid which can dissolve the sacrificial film 11. There is no particular limitation on the liquid which dissolves the sacrificial film 11, as long as it is a liquid which does not cause deterioration of or dissolve the thin film 14 and the support film 19. Examples of the liquid for dissolving the sacrificial film 11 include water, an aqueous acidic or basic solution, an organic solvent, and an aqueous solution of the organic solvent and, of these liquid, water, an aqueous acidic or basic solution, and an organic solvent are preferable.

Suitable examples of the liquid which dissolves the material of the sacrificial film 11 material include an organic solvent. Examples of the organic solvent include lactones, ketones, polyhydric alcohols, organic solvent of cyclic ethers and esters, aromatic organic solvent, alcohol-based solvent, terpene-based solvent, hydrocarbon-based solvent, petroleum-based solvent, and the like. These organic solvents may be used alone, or plural kinds thereof may be used in combination.

Examples of the organic solvent of lactones include γ-butyrolactone, and the like. Examples of the organic solvent of ketones include acetone, methyl ethyl ketone, cycloheptanone, cyclohexanone, methyl-n-pentyl ketone, methyl isopentyl ketone, 2-heptanone, and the like. Examples of the organic solvent of polyhydric alcohols include ethylene glycol, diethylene glycol, propylene glycol, dipropylene glycol, and the like.

The organic solvent of polyhydric alcohols may be derivatives of polyhydric alcohols, and examples thereof include compounds having an ester bond (ethylene glycol monoacetate, diethylene glycol monoacetate, propylene glycol monoacetate, dipropylene glycol monoacetate, etc.), compounds having an ether bond (monoalkyl ether or monophenyl ether, such as monomethyl ether, monoethyl ether, monopropyl ether, or monobutyl ether) of the above-mentioned polyhydric alcohols or the above-mentioned compounds having an ester bond), and the like. Of these, propylene glycol monomethyl ether acetate (PGMEA) and propylene glycol monomethyl ether (PGME) are preferable.

Examples of the organic solvent of cyclic ethers include dioxane, and the like; and examples of the organic solvent of esters include ethyl lactate, ethyl lactate (EL), methyl acetate, ethyl acetate, butyl acetate, methyl pyruvate, ethyl pyruvate, methyl methoxypropionate, ethyl ethoxypropionate, and the like.

Examples of the aromatic organic solvent include anisole, ethyl benzyl ether, cresyl methyl ether, diphenyl ether, dibenzyl ether, phenetole, butyl phenyl ether, ethylbenzene, diethylbenzene, pentylbenzene, isopropylbenzene, toluene, xylene, cymene, mesitylene, and the like.

There is no particular limitation on the alcohol-based solvent, as long as it can dissolve a sacrificial film 11, and examples thereof include methanol, ethanol, and the like.

Examples of the terpene-based solvent include geraniol, nerol, linalool, citral, citronellol, menthol, isomenthol, neomenthol, α-terpineol, β-terpineol, γ-terpineol, terpinen-1-ol, terpinen-4-ol, dihydroterpinyl acetate, 1,4-cineole, 1,8-cineole, borneol, carvone, ionone, thujone, camphor, and the like.

Examples of the hydrocarbon-based solvent include a linear, branched, or cyclic hydrocarbon. Examples of the hydrocarbon-based solvent include linear hydrocarbons having 3 to 15 carbon atoms, such as hexane, heptane, octane, nonane, decane, undecane, dodecane, and tridecane; branched hydrocarbons having 4 to 15 carbon atoms, such as methyloctane; and cyclic hydrocarbons such as p-menthane, o-menthane, m-menthane, diphenylmenthane, 1,4-terpin, 1,8-terpin, bornane, norbornane, pinane, thujane, carane, longifolene, α-terpinene, β-terpinene, γ-terpinene, α-pinene, β-pinene, α-thujone, and β-thujone.

Examples of the petroleum-based solvent include cyclohexane, cycloheptane, cyclooctane, naphthalene, decahydronaphthalene (decalin), tetrahydronaphthalene (tetralin), and the like.

Next, as shown in FIG. 1B, a liquid negative photosensitive composition is applied on a surface of the sacrificial film 11 thus formed as mentioned above to form a photosensitive composition thin film 12. The method for applying a negative photosensitive composition on a surface of the sacrificial film 11 is the same as that in which a coating solution for formation of a sacrificial film is applied on a surface of a substrate 10. The thickness of the photosensitive composition thin film 12 is appropriately adjusted so as to form a thin film 14 having a thickness of 1 to 1,000 nm.

As shown in FIG. 1C, the photosensitive composition thin film 12 is cured by irradiation of exposure light 13 to the photosensitive composition thin film 12 to form a thin film 14. There is no particular limitation on the method for exposing the photosensitive composition thin film 12, and exposure is performed by a known method in which a photocurable photosensitive composition is cured.

When the substrate 10 is made of a transparent material like a glass substrate, the photosensitive composition thin film 12 can also be exposed from a surface opposite to the surface on which the sacrificial film 11 and the photosensitive composition thin film 12 of the substrate 10 are formed.

After formation of the thin film 14, as shown in FIG. 1D, a photosensitive composition thick film 15 is formed on the thin film 14. The photosensitive composition thick film 15 is preferably formed by applying a liquid photosensitive composition on the thin film 14. The method for applying a photosensitive composition on a surface of the thin film 14 is the same as that in which a coating solution for formation of a sacrificial film is applied on a surface of a substrate 10. The thickness of the photosensitive composition thick film 15 is appropriately adjusted so as to form a support film 19 having a thickness of 1 to 1,000 µm.

Next, a photosensitive composition thick film 15 is regioselectively exposed and developed to form a support film 19 which is a porous film. FIG. 1E shows the case where the photosensitive composition thick film 15 is formed by using a negative photosensitive composition which is cured under exposure. There is no particular limitation on the method in which a surface of the photosensitive composition thick film 15 is regioselectively exposed, and examples thereof include a drawing method using laser, a method in which exposure is performed through a light-shielding mask, and the like. As shown in FIG. 1E, according to this method, the exposed area 16 and the unexposed area 17 are formed in the photosensitive composition thick film 15 by regioselectively irradiation of exposure light 13 to a surface of the photosensitive composition thick film 15.

When the substrate 10 is made of a transparent material like a glass substrate, the photosensitive composition thick film 15 can also be exposed from a surface opposite to the surface on which the sacrificial film 11 and the thin film 14 of the substrate 10 are formed.

As shown in FIG. 1F and FIG. 1G, the unexposed area 17 is dissolved and removed to form a support film 19 by bringing the exposed photosensitive composition thick film 15 into contact with a developing solution 18 to thereby develop the thick film. A membrane filter 21 in which a thin film 14 and a support film 19 are laminated with each other on a substrate 10 is formed by forming the support film 19 in this way.

The developing solution 18 is appropriately selected according to the kind of the photosensitive composition. Typically, a developing solution of an organic solvent and an alkali developing solution are preferably used.

Examples of the organic solvent used as the developing solution 18 include polar solvents such as a ketone-based solvent, an ester-based solvent, an ether-based solvent, and an amide-based solvent; and a hydrocarbon-based solvent.

It is possible to use, as the alkali developing solution, for example, an aqueous solution of alkalis such as sodium hydroxide, potassium hydroxide, sodium carbonate, sodium silicate, sodium metasilicate, aqueous ammonia, ethylamine, n-propylamine, diethylamine, di-n-propylamine, triethylamine, methyldiethylamine, dimethylethanolamine, triethanolamine, tetramethylammonium hydroxide, tetraethylammonium hydroxide, pyrrole, piperidine, 1,8-diazabicyclo[5,4,0]-7-undecene, 1,5-diazabicyclo[4,3,0]-5-nonane, and the like. It is also possible to use, as the alkali developing solution, an aqueous solution prepared by adding an appropriate amount of a watersoluble organic solvent such as methanol or ethanol, and a surfactant to the above aqueous solutions of alkalis.

The developing time varies depending on the composition, thickness, and the like of the photosensitive composition thick film 15, and is usually 1 to 30 minutes. The developing method may be selected from a known method, and may be a liquid building-up method, a dipping method, a puddle method, a spray developing method, and the like.

As shown in FIG. 1H, the substrate 10 including the membrane filter 21 thus formed is brought into contact with a dissolving solution 20 which dissolves a sacrificial film 11 to thereby dissolve the sacrificial film 11, thus enabling detaching of the membrane filter 21 from a surface of the substrate 10.

There is no particular limitation on the method for dissolving the sacrificial film 11. As shown in FIG. 1H, the method is preferably a method in which the substrate 10 including the sacrificial film 11 and the membrane filter 21 is immersed in a container charged with the dissolving solution 20.

It is possible to use, as the dissolving solution 20 which dissolves the sacrificial film 11, various liquid capable of dissolving the above-mentioned material of the sacrificial film 11.

The membrane filter 21 thus detached from the substrate 10 is pulled up from the dissolving solution 20 and optionally subjected to rinsing with deionized water and dried, and then used for various applications.

### Second Method

Of the method for producing a membrane filter according to the present disclosure, a preferred method which is different from the first method when a thin film 14 has not through holes includes a method in which the thin film 14 formed on the substrate 10 is bonded to a surface of a support film 19 formed on the substrate 10 which is different from that including the thin film 14. This method is referred to as a second method of a preferred method for producing a membrane filter 21.

The material for formation of the thin film 14 in the same manner as in first method is preferably a thermosetting composition capable of curing under heating, or a negative photosensitive composition capable of curing under exposure from the viewpoint being capable of forming a thin film 14 having excellent strength. Of these curable compositions, a negative photosensitive composition capable of curing under exposure is preferable since a thin film 14 can be formed within a short time.

In the second method, it is possible to form a membrane filter 21 in which the thin film 14 and the support film 19 are laminated with each other between two substrates 10. The membrane filter 21 is used in a state of being detached from two substrates 10. Therefore, since it is easy to detach two substrates 10 from the membrane filter 21, it is preferred that the thin film 14 and the support film 19 are respectively formed on the substrate 10 via a sacrificial film 11.

Using a negative photosensitive composition capable of curing under exposure, which is preferred in the second method, a description will be made of a method including a step of bonding a thin film 14 formed on a substrate 10 via a sacrificial film 11 to a support film 19 formed on a substrate 10 via a sacrificial film 11 with reference to FIGs. 2A to 2C.

In the second method, first, as shown in FIG. 2A, a thin film 14 formed on a substrate 10 via a sacrificial film 11 and a support film 19 formed on a substrate 10 via a sacrificial film 11 are prepared. The method for forming a thin film 14 is the same as the first method. The method for forming a support film 19 is the same as the first method, except that a photosensitive composition thick film 15 is not formed on the thin film 14, but on the sacrificial film 11.

Next, a thin film 14 formed on a substrate 10 via a sacrificial film 11 and a support film 19 formed on a substrate 10 via a sacrificial film 11 are disposed so that the thin film 14 and the support film 19 face each other, and then the support film 19 is bonded with the thin film 14. Examples of the method for bonding the support film 19 with the thin film 14 include a method in which laminate (thermocompression bonding), physical adsorption, and adhesive such as a curable compound are used as an adhesive layer. For example, the support film 19 may be bonded with the thin film 14 by applying a pressure to at least one substrate 10 so as not to cause breakage of the support film 19 or the thin film 14, using a roll. Such bonding operation enables the formation of a membrane filter 21 in which the thin film 14 and the support film 19 are laminated with each other between two substrates 10, as shown in FIG. 2B.

As shown in FIG. 2C, the membrane filter 21 thus formed between two substrates 10 is brought into contact with a dissolving solution 20 which dissolves a sacrificial film 11 to thereby dissolve the sacrificial film 11, thus enabling detaching of membrane filter 21 from a surface of two substrates 10.

There is no particular limitation on the method for dissolving the sacrificial film 11. The method is preferably a method in which a substrate 10 including the sacrificial film 11 and the membrane filter 21 is immersed in a container charged with the dissolving solution 20, as shown in FIG. 1H. In this case, after dissolution of the sacrificial film 11, wrinkles and flaws sometimes occur in the detached membrane filter 21 due to the own weight of the substrate 10. Therefore, in the case of dissolving the sacrificial film 11, it is preferred that the substrate 10 of the liquid surface side of the dissolving solution 20 is fixed so as not to move in the dissolving solution 20, or both two substrates 10 are fixed so as not to freely remove in the dissolving solution 20.

It is possible to use, as the dissolving solution 19 for dissolving the sacrificial film 11, various liquids capable of dissolving the above-mentioned materials of the sacrificial film 11.

The membrane filter 21 thus detached from the substrate 10 is pulled up from the dissolving solution 20 and optionally subjected to rinsing with deionized water and drying, and then used for various applications.

### Third Method

Of the method for producing a membrane filter according to the present disclosure, a preferred method when a thin film 14 has through holes includes a method in which the thin film 14 formed on the substrate 10 is bonded to a surface of a support film 19 formed on the substrate 10 which is different from that including the thin film 14. This method is referred to as a third method of a preferred method for producing a membrane filter 21.

It is possible to use, as the material for formation of the thin film 14, a photosensitive composition so as to form through holes. From the viewpoint being capable of forming a thin film 14 having through holes, which is excellent in strength, by exposure and development of a photosensitive composition thin film 12, the material for formation of a thin film 14 is preferably negative photosensitive composition which is cured under exposure.

In third method, it is possible to form a membrane filter 21 in which the thin film 14 and the support film 19 are laminated with each other between two substrates 10. The membrane filter 21 is used in the state of being detached from two substrates 10. Therefore, since it is easy to detach two substrates 10 from the membrane filter 21, it is preferred that the thin film 14 and the support film 19 are respectively formed on the substrate 10 via a sacrificial film 11.

Using a negative photosensitive composition capable of curing under exposure, which is preferred in the third method, a description will be made of a method including a step of bonding a thin film 14 formed on a substrate 10 via a sacrificial film 11 to a support film 19 formed on a substrate 10 via a sacrificial film 11 with reference to FIGs. 3A to 3F.

First, a method for forming a thin film 14 having through holes will be described. When a thin film 14 having through holes is formed, first, as shown in FIG. 3A, a photosensitive composition thin film 12 is formed on a surface of the sacrificial film 11 formed on the substrate 10 in the same manner as in the first method.

Next, as shown in FIG. 3B, the photosensitive composition thin film 12 is regioselectively exposed. Such exposure enables the formation of the exposed area 16 and the unexposed area 17 in the photosensitive composition thin film 12. Exposing method is the same as the method of exposure to photosensitive composition thick film 15 in the first method.

As shown in FIG. 3C and FIG. 3D, the exposed photosensitive composition thin film 12 is brought into contact with a developing solution 18 to thereby develop the thin film, and thus the unexposed area 17 is dissolved and removed to form a thin film 14 having through holes.

As shown in FIG. 3D, in addition to the above-described thin film 14 having through holes, a support film 19 formed on a substrate 10 via a sacrificial film 11 in the same manner as in the second method is prepared.

Next, a thin film 14 formed on a substrate 10 via a sacrificial film 11 and a support film 19 formed on a substrate 10 via a sacrificial film 11 are disposed so that the thin film 14 and the support film 19 face each other, and then an external force is applied to at least one substrate 10 so that the support film 19 is contact-bonded with the thin film 14. As a result, it is possible to form a membrane filter 21 in which a thin film 14 having through holes and a support film 19 are laminated with each other between two substrates 10, as shown in FIG. 3E.

As shown in FIG. 3F, the membrane filter 21 formed between two substrates 10 in the same manner as in the second method is brought into contact with a dissolving solution 20 which dissolves a sacrificial film 11 to thereby dissolve the sacrificial film 11, thus enabling detaching of the membrane filter 21 from a surface of two substrates 10.

The membrane filter 21 thus detached from the substrate 10 is pulled up from the dissolving solution 20 and optionally subjected to rinsing with deionized water and drying, and then used for various applications.

### Modification of First Method

Modification of a first method will be described with reference to FIGs. 4A to4I. According to the third method, two substrates are needed so as to produce a membrane filter in which a thin film having through holes and a support film having through holes are laminated with each other. However, according to modification of the first method, use of only one substrate enables the production of a membrane filter in which a thin film having through holes and a support film having through holes are laminated with each other.

Specifically, first, as shown in FIG. 4A, a photosensitive composition thin film 12 is formed on a surface of a sacrificial film 11 formed on a substrate 10 in the same manner as in the first method.

Next, as shown in FIG. 4B, a photosensitive composition thin film 12 is regioselectively exposed. Such exposure enables the formation of the exposed area 16 and the unexposed area 17 in the photosensitive composition thin film 12. The exposing method is the same as the method of exposure to a photosensitive composition thick film 15 in the first method.

As shown in FIG. 4C and FIG. 4D, the exposed photosensitive composition thin film 12 is brought into contact with a developing solution 18 to thereby develop the thin film, and thus the unexposed area 17 is dissolved and removed to form a thin film 14 having through holes.

After forming the thin film 14 having through holes, as shown in FIG. 4E, a photosensitive composition thick film 15 is formed on the thin film 14. At this time, a photosensitive composition thick film 15 is formed so as to fill through holes in the thin film 14 with a photosensitive composition. The photosensitive composition thick film 15 is formed in the same manner as in the first method.

The photosensitive composition filled in through holes of the thin film 14 is removed by dissolving in a developing solution 18 in the case of developing the exposed photosensitive composition thick film 15 with the developing solution 18. Therefore, in the case of forming a photosensitive composition thick film 15, it is not necessary that through holes in thin film 14 are completely filled with a photosensitive composition.

Next, as shown in FIG. 4F and FIG. 4G, the photosensitive composition thick film 15 is regioselectively exposure and then developed to form a support film 19 which is a porous film.

In the present modification, the photosensitive composition thick film 15 is regioselectively exposed so as to completely expose the photosensitive composition filled in through holes of the thin film 14. Therefore, in the case of developing the exposed photosensitive composition thick film 15 with a developing solution 18, the photosensitive composition filled in through holes in the thin film 14 is dissolved in the developing solution 18, together with the exposed area 16 formed in the photosensitive composition thick film 15.

The above-mentioned developing operation enables the production of a membrane filter 21, in which the thin film 14 having through holes and the support film 19 having through holes are laminated with each other, included in the substrate 10 via the sacrificial film 11, as shown in FIG. 4H.

As shown in FIG. 4I, the membrane filter 21 thus formed is brought into contact with a dissolving solution 20 which dissolves a sacrificial film 11 to thereby dissolve the sacrificial film 11, thus enabling detaching of the membrane filter 21 from a surface of two substrates 10.

The membrane filter 21 thus detached from the substrate 10 is pulled up from the dissolving solution 20 and optionally subjected to rinsing with deionized water and drying, and then used for various applications.

### EXAMPLES

### [Example]

On a substrate made of glass, a solution (solid content: 10% by mass) prepared by dissolving a thermoplastic elastomer having a structure shown below as a hydrogenated styrene-isoprene copolymer in decahydronaphthalene was applied, and then baked under the conditions of 90°C for 5 minutes and 120°C for 5 minutes to form a sacrificial film having a thickness of 1.5 µm.

### Hydrogenated Styrene-Isoprene Copolymer

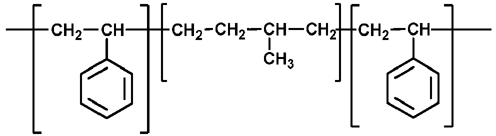

Next, on the sacrificial film, a negative photosensitive composition prepared by dissolving 100 parts by mass of a cresol novolak type epoxy resin having a structure shown below and 3 parts by mass of a photo acid generator having a structure shown below in propylene glycol monomethyl ether acetate (PGMEA) so as to adjust the solid content to 7% by mass was applied. Next, baking at 90°C for 3 minutes, exposure to ghi-line at an exposure dose of 100 mJ/cm², and baking at 120°C for 5 minutes were performed in this order to form a thin film having a thickness of 100 nm.

### Cresol Novolak Type Epoxy Resin

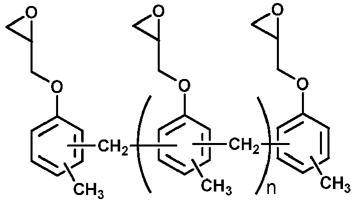

(n represents a repeating unit in parenthesis)

### Photo Acid Generator

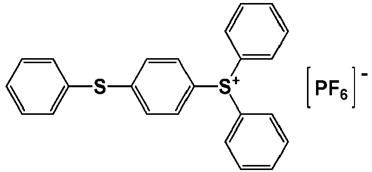

On the thin film thus formed, a negative photosensitive composition prepared by dissolving 50 parts by mass of a phenol novolak type epoxy resin having a structure shown below, 50 parts by mass of a bisphenol A type epoxy resin having a structure shown below, and 3 parts by weight of a photo acid generator having a structure shown below in PGMEA so as to adjust the solid content to 50% by mass was applied. Next, baking at 90°C for 3 minutes, exposure to ghi-line at an exposure dose of 200 mJ/cm², and baking at 90°C for 5 minutes were performed in this order. Exposure was regioselectively performed through a mask so as to form circular holes each having a pore diameter of 10 µm at a pitch (a distance between centers of holes) of 50 µm. After exposure, the substrate was immersed in PGMEA for 1 minute to thereby perform development to form a 10 µm thick support film including holes each having a circular opening with the above-mentioned diameter and pitch.

### Phenol Novolak Type Epoxy Resin

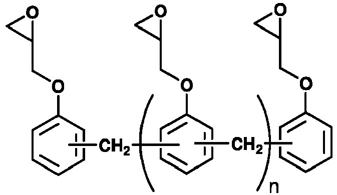

### Bisphenol A Type Epoxy Resin

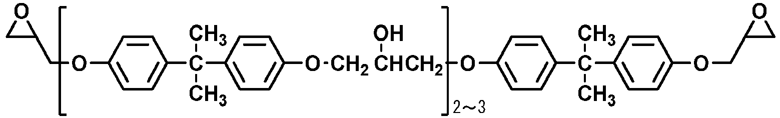

Next, the substrate with a membrane filter including a thin film and a support film laminated with each other was dissolved in p-menthane at room temperature for 1 hour to thereby dissolve the sacrificial film, and then the membrane filter was detached from the substrate. The detached membrane filter was recovered, rinsed with deionized water, and then dried.

The membrane filter thus obtained was fixed to a jig and a nitrogen gas was fed from the support film side of the membrane filter under the conditions where the pressure difference between both sides of the membrane filter of 0.05 MPa. As a result, a nitrogen flow rate of 100 ml/minute was recognized. After a confirmation test of the nitrogen flow rate, breakage of the membrane filter was not recognized, thus revealing that the membrane filter obtained in Example 1 is excellent in strength.

### [Comparative Example]

In the same manner as in Examples, except that a thickness of a thin film is adjusted to 1,500 nm, a membrane filter was obtained. In the same manner as in Example, regarding the obtained membrane filter, the nitrogen flow rate was recognized when a differential pressure of 0.05 MPa was applied. As a result, the nitrogen flow rate was 0 ml/minute. In other words, the membrane filter of Comparative Example did not enable permeation of nitrogen at a differential pressure of 0.05 MPa.

### EXPLANATION OF REFERENCE NUMERALS

10: Substrate (first substrate or second substrate)
11: Sacrificial film (first sacrificial film or second sacrificial film)
12: Photosensitive composition thin film (second photosensitive composition film)
13: Exposure light
14: Thin film
15: Photosensitive composition thick film (first photosensitive composition film)
16: Exposed area
17: Unexposed area
18: Developing solution
19: Support film
20: Dissolving solution
21: Membrane filter

## Claims

1. A method for producing a membrane filter (21) comprising a thin film (14) and a support film (19) supporting the thin film (14), **characterized in that** the method comprises the steps of:
forming the thin film (14) on a first sacrificial film (11) that is formed on a first substrate (10),
forming a first photosensitive composition film (15) on the thin film (14),
forming the support film (19) by exposure and development of the first photosensitive composition film (15) thereby obtaining the membrane filter (21), and
detaching the membrane filter (21) from the first substrate (10) by dissolving the first sacrificial film (11) in a dissolving solution (20),
wherein
the thin film (14) has a thickness of 1 to 1,000 nm,
the support film (19) is a porous film having a thickness of 1 to 1,000 µm and a plurality of hole portions penetrating in the thickness direction,
the thin film (14) does not have the hole portion penetrating in the thickness direction,
a material for formation of the thin film (14) is an organic material,
a material for formation of the support film (19) is an organic material.

2. The method according to claim 1, further comprising:
laminating the first photosensitive composition film (15) with a second substrate (10), wherein
the thin film (14) is laminated with the first substrate (10).

3. The method according to claim 2, wherein
the thin film (14) is formed on the first sacrificial film (11) that is formed on the first substrate (10), and
the support film (19) is formed on a second sacrificial film (11) that is formed on the second substrate (10),
the method further comprising:
detaching the membrane filter (21) from the first substrate (10) by dissolving the first sacrificial film (11) in a dissolving solution (20), and also from the second substrate (10) by dissolving the second sacrificial film (11) in a dissolving solution (20).

## Patentansprüche

1. Verfahren zum Herstellen eines Membranfilters (21), das eine dünne Schicht (14) und eine Trägerschicht (19) aufweist, welche die dünne Schicht (14) trägt, **dadurch gekennzeichnet, dass** das Verfahren die Schritte aufweist:
Bilden der dünnen Schicht (14) auf einer ersten Opferschicht (11), die auf einem ersten Substrat (10) ausgebildet ist,
Bilden einer ersten lichtempfindlichen Zusammensetzungsschicht (15) auf der dünnen Schicht (14),
Bilden der Trägerschicht (19) durch Belichtung und Entwicklung der ersten lichtempfindlichen Zusammensetzungsschicht (15), wodurch das Membranfilter (21) erhalten wird, und
Lösen des Membranfilters (21) vom ersten Substrat (10) durch Auflösen der ersten Opferschicht (11) in einer Auflösungslösung (20),
wobei
die dünne Schicht (14) eine Dicke von 1 bis 1.000 nm aufweist,
die Trägerschicht (19) eine poröse Schicht ist, die eine Dicke von 1 bis 1.000 µm und
mehrere Lochabschnitte, die in die Richtung der Dicke eindringen, aufweist,
die dünne Schicht (14) den Lochabschnitt, der in der Richtung der Dicke eindringt, nicht aufweist,
ein Material zur Bildung der dünnen Schicht (14) ein organisches Material ist,
ein Material zur Bildung der Trägerschicht (19) ein organisches Material ist.

2. Verfahren nach Anspruch 1, das ferner aufweist:
Laminieren der ersten lichtempfindlichen Zusammensetzungsschicht (15) mit einem zweiten Substrat (10),
wobei
die dünne Schicht (14) mit dem ersten Substrat (10) laminiert wird.

3. Verfahren nach Anspruch 2, wobei
die dünne Schicht (14) auf der ersten Opferschicht (11), die auf dem ersten Substrat (10) ausgebildet ist, gebildet wird, und
die Trägerschicht (19) auf einer zweiten Opferschicht (11), die auf dem zweiten Substrat (10) ausgebildet ist, gebildet wird,
wobei das Verfahren ferner aufweist:
Lösen des Membranfilters (21) vom ersten Substrat (10) durch Auflösen der ersten Opferschicht (11) in einer Auflösungslösung (20), und außerdem vom zweiten Substrat (10) durch Auflösen der zweiten Opferschicht (11) in einer Auflösungslösung (20).

## Revendications

1. Procédé pour produire un filtre à membrane (21) comprenant un film mince (14) et un film de support (19) supportant le film mince (14), **caractérisé en ce que** le procédé comprend les étapes suivantes :
la formation du film mince (14) sur un premier film sacrificiel (11) qui est formé sur un premier substrat (10),
la formation d'un premier film de composition photosensible (15) sur le film mince (14),
la formation du film de support (19) par exposition et développement du premier film de composition photosensible (15), pour obtenir ainsi le filtre à membrane (21), et
le détachement du filtre à membrane (21) à partir du premier substrat (10) en dissolvant le premier film sacrificiel (11) dans une solution de dissolution (20),
dans lequel
le film mince (14) a une épaisseur de 1 à 1 000 nm,
le film de support (19) est un film poreux ayant une épaisseur de 1 à 1 000 µm et une pluralité de parties à trou pénétrant dans la direction d'épaisseur,
le film mince (14) n'a pas la partie à trou pénétrant dans la direction d'épaisseur,
un matériau pour la formation du film mince (14) est un matériau organique,
un matériau pour la formation du film de support (19) est un matériau organique.

2. Procédé selon la revendication 1, comprenant en outre :
la stratification du premier film de composition photosensible (15) avec un second substrat (10), dans lequel
le film mince (14) est stratifié avec le premier substrat (10).

3. Procédé selon la revendication 2, dans lequel
le film mince (14) est formé sur le premier film sacrificiel (11) qui est formé sur le premier substrat (10), et
le film de support (19) est formé sur un second film sacrificiel (11) qui est formé sur le second substrat (10),
le procédé comprenant en outre :
le détachement du filtre à membrane (21) à partir du premier substrat (10) en dissolvant le premier film sacrificiel (11) dans une solution de dissolution (20), et également à partir du second substrat (10) en dissolvant le second film sacrificiel (11) dans une solution de dissolution (20).
